# EUROPEAN PATENT APPLICATION

(11) **EP 4 664 726 A1**
(43) Date of publication of application: **17.12.2025**
(21) Application number: 23921337.4
(22) Date of filing: 08.12.2023
(51) Int. Cl.: H02K 1/276

(54) **ROTOR FOR ROTATING ELECTRIC MACHINE**

(30) Priority: 10.02.2023 JP 2023019327
(71) Applicant: AISIN CORPORATION, Kariya-shi, Aichi 448-8650 (JP)
(72) Inventor: KIMURA Yoichiro, Kariya-shi, Aichi 448-8650 (JP); IDEUE Shigeki, Kariya-shi, Aichi 448-8650 (JP); IIJIMA Ami, Kariya-shi, Aichi 448-8650 (JP); KIDO Yushi, Kariya-shi, Aichi 448-8650 (JP); TSUDA Teppei, Kariya-shi, Aichi 448-8650 (JP)
(74) Representative: TBK
(86) International application number: PCT/JP2023/044025
(87) International publication number: WO 2024/166517

(57) **Abstract**

Disclosed is a rotor for a rotating electric machine, the rotor including: a rotor core; a first-layer permanent magnet that is disposed in a first-layer magnet hole; and a second-layer permanent magnet that is disposed in a second-layer magnet hole. When a magnet angle related to one magnet piece is defined as an angle formed by a reference line extending in a direction vertical to a d-axis from an intersection between the d-axis and an extending direction of a side surface of the one magnet piece in a main magnetic flux direction as viewed in an axial direction and the extending direction of the side surface, and a radially inner side of the reference line as viewed in the axial direction is defined a positive side of the magnet angle, a first magnet angle related to a first magnet piece that forms the first-layer permanent magnet and is on the d-axis or closest to the d-axis is smaller than a second magnet angle related to a second magnet piece that forms the second-layer permanent magnet and is on the d-axis or closest to the d-axis.

## Description

### TECHNICAL FIELD

The present disclosure relates to a rotor for a rotating electric machine.

### BACKGROUND ART

A two-layer arrangement structure in which a plurality of permanent magnets are arranged in two layers of a radially inner side and a radially outer side in a rotor core is known.

### CITATIONS LIST

### PATENT LITERATURE

Patent Literature 1: JP 2022-107370 A

### SUMMARY OF INVENTION

### TECHNICAL PROBLEMS

Incidentally, in the case of such a two-layer arrangement structure (the same applies to a multi-layer arrangement structure of three or more layers), in order to cope with an increase in centrifugal force due to an increase in rotation speed of a rotating electric machine, magnet holes related to a radially outer layer (here, referred to as "first-layer magnet holes") and magnet holes related to a radially inner layer (here, referred to as "second-layer magnet holes") may be formed to protrude radially outward about a d-axis as viewed in the axial direction.

However, in such a configuration, it has been found in analysis that a significant increase in counter electromotive voltage, a decrease in reluctance torque, and the like may occur depending on the angle of the radially outwardly protruding shape related to the first-layer magnet holes, the angle of the radially outwardly protruding shape related to the second-layer magnet holes, and the relationship between these two angles.

Therefore, in one aspect, the present disclosure improves reluctance torque without significantly increasing a counter electromotive voltage or while reducing a counter electromotive voltage.

### SOLUTIONS TO PROBLEMS

In one aspect, there is provided a rotor for a rotating electric machine, the rotor including:
a rotor core in which first-layer magnet holes are formed symmetrically with respect to a d-axis as viewed in an axial direction, and second-layer magnet holes are formed radially inside the first-layer magnet holes and are formed symmetrically with respect to the d-axis as viewed in the axial direction;
a first-layer permanent magnet that is disposed in each of the first-layer magnet holes; and
a second-layer permanent magnet that is disposed in each of the second-layer magnet holes,
in which the rotor core includes a first section that is located radially outside the first-layer magnet holes and forms an outer circumferential surface of the rotor core, a second section that passes between the first-layer magnet holes and the second-layer magnet holes and has both circumferential sides extending to the outer circumferential surface of the rotor core, and a third section that passes radially inside the second-layer magnet holes and has both circumferential sides extending to the outer circumferential surface of the rotor core, and
when a magnet angle related to one magnet piece is defined an angle formed by a reference line extending in a direction vertical to the d-axis from an intersection between the d-axis and an extending direction of a side surface of the one magnet piece in a main magnetic flux direction as viewed in the axial direction, and the extending direction of the side surface, and a radially inner side of the reference line as viewed in the axial direction is defined as a positive side of a magnet angle,
a first magnet angle related to a first magnet piece that forms the first-layer permanent magnet and is on the d-axis or closest to the d-axis is smaller than a second magnet angle related to a second magnet piece that forms the second-layer permanent magnet and is on the d-axis or closest to the d-axis.

### ADVANTAGEOUS EFFECTS OF INVENTION

In one aspect, according to the present disclosure, reluctance torque can be increased without significantly increasing a counter electromotive voltage or while reducing a counter electromotive voltage.

### BRIEF DESCRIPTION OF DRAWINGS

FIG. 1 is a cross-sectional view schematically illustrating a cross-sectional structure of a motor according to an embodiment.
FIG. 2 is a cross-sectional view of a rotor.
FIG. 3 is an enlarged view (part 1) of a portion related to one magnetic pole illustrated in FIG. 2.
FIG. 4 is an enlarged view (part 2) of the portion related to the one magnetic pole illustrated in FIG. 2.
FIG. 5 is an explanatory diagram (part 1) of an effect of the present embodiment based on an analysis result.
FIG. 6 is an explanatory diagram (part 2) of an effect of the present embodiment based on an analysis result.
FIG. 7 is an explanatory diagram (part 3) of an effect of the present embodiment based on an analysis result.
FIG. 8 is an explanatory diagram (part 4) of an effect of the present embodiment based on an analysis result.
FIG. 9 is an explanatory diagram (part 5) of an effect of the present embodiment based on an analysis result.

### DESCRIPTION OF EMBODIMENTS

Hereinafter, each embodiment will be described in detail with reference to the accompanying drawings. Note that the dimensional ratios in the drawings are merely examples, and the dimensional ratios are not limited thereto, and shapes and the like in the drawings may be partially exaggerated for convenience of description. In addition, in the drawings, only some of a plurality of sections having the same attribute may be denoted by reference signs for the sake of clarity.

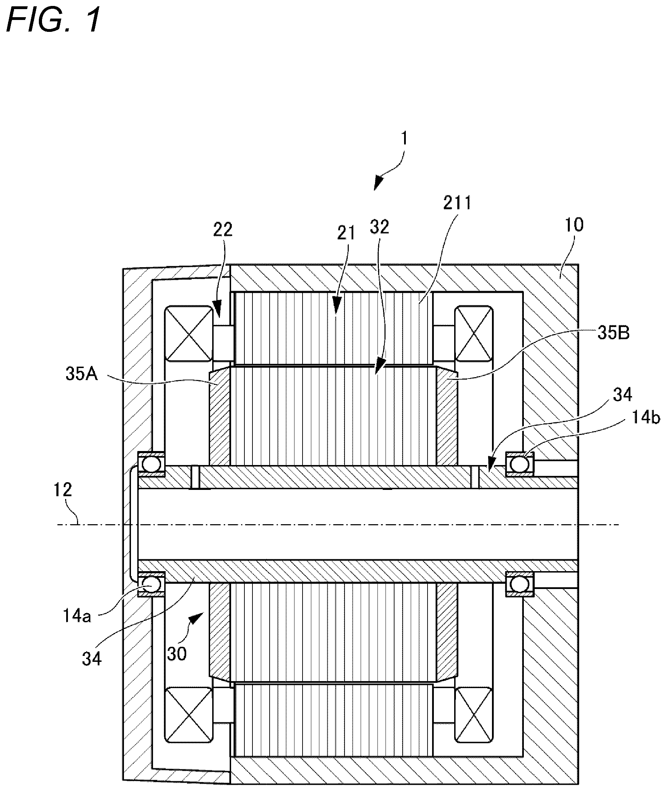

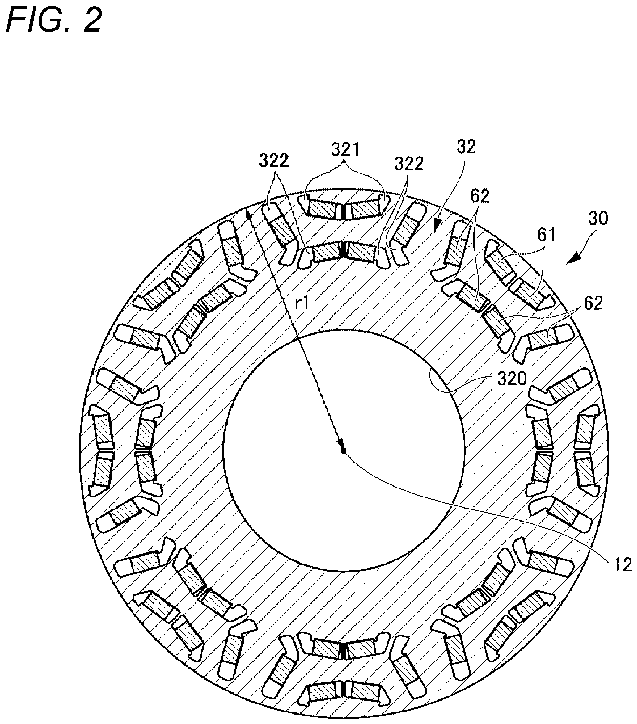

FIG. 1 is a cross-sectional view schematically illustrating a cross-sectional structure of a motor 1 according to an embodiment. FIG. 2 is a cross-sectional view of a rotor 30 (a cross-sectional view taken along a plane vertical to the axial direction).

FIG. 1 illustrates a rotation axis 12 of the motor 1. In the following description, the axial direction refers to a direction in which a rotation axis (rotation center) 12 of the motor 1 extends, and the radial direction refers to a radial direction around the rotation axis 12. Therefore, a radially outer side refers to a side away from the rotation axis 12, and a radially inner side refers to a side toward the rotation axis 12. In addition, a circumferential direction corresponds to a rotation direction around the rotation axis 12.

The motor 1 may be, for example, a motor for driving a vehicle used in a hybrid vehicle or an electric vehicle. However, the motor 1 may be used for any other application.

The motor 1 is of an inner rotor type, and is provided such that a stator 21 surrounds the radially outer side of the rotor 30. The stator 21 is fixed to a motor housing 10. The stator 21 includes a stator core 211 made of, for example, an annular magnetic laminated steel plate, and a plurality of slots (not illustrated) around which a coil 22 is wound is formed radially inside the stator core 211.

The rotor 30 is disposed radially inside the stator 21.

The rotor 30 includes a rotor core 32, a rotor shaft 34, end plates 35A and 35B, and magnet pieces 61, 62.

The rotor core 32 is fixed to a radially outer surface of the rotor shaft 34 and rotates integrally with the rotor shaft 34. The rotor core 32 has a shaft hole 320 (see FIG. 2), and the rotor shaft 34 is fitted into the shaft hole 320. The rotor core 32 may be fixed to the rotor shaft 34 by shrink fitting, press fitting, or the like. For example, the rotor core 32 may be coupled to the rotor shaft 34 by a key coupling or a spline coupling. The rotor shaft 34 is rotatably supported by the motor housing 10 via bearings 14a, 14b. Note that the rotor shaft 34 defines the rotation axis 12 of the motor 1.

The rotor core 32 is formed of, for example, an annular magnetic laminated steel plate. Inside the rotor core 32, the magnet pieces 61, 62 (see FIG. 2) are embedded. That is, the rotor core 32 has magnet holes 321 and 322 (see FIG. 2) penetrating in the axial direction, and the magnet pieces 61, 62 are inserted and fixed in the magnet holes 321, 322. Note that in a modification, the rotor core 32 may be formed of a green compact in which magnetic powder is compressed and solidified.

The rotor core 32 is designed to be circular with a first radius r1. Note that, in a modification, the circular shape of the rotor core 32 does not need to be a perfect circle, and may be, for example, a circular shape partially having a notch.

As illustrated in FIG. 2, the rotor core 32 is rotationally symmetric about the rotation axis 12 as viewed in the axial direction. In the example illustrated in FIG. 2, the sets of the magnet pieces 61, 62 overlap each other every time the rotor core 32 rotates 45 degrees about the rotation axis 12.

The plurality of magnet pieces 61, 62 are in the form of sintered magnets, and may be formed of neodymium or the like. In the present embodiment, as an example, as illustrated in FIG. 2, the plurality of magnet pieces 61, 62 are arranged such that the magnet pieces 61 are paired and the magnet pieces 62 are paired as viewed in the axial direction. In this case, a common magnetic pole is formed between the pair of magnet pieces 61 and between the pair of magnet pieces 62. Note that the plurality of magnet pieces 61, 62 are arranged such that S poles and N poles alternately appear in the circumferential direction. Note that in the present embodiment, the number of magnetic poles is eight, but the number of magnetic poles is arbitrary. In addition, in the present embodiment, the magnet pieces 61, 62 have the same linear form as viewed in the axial direction, but may have different forms. Furthermore, at least one of the magnet piece 61 or the magnet piece 62 may have an arc shape as viewed in the axial direction.

Note that although FIG. 1 illustrates the motor 1 having a specific structure, the structure of the motor 1 is not limited to such a specific structure. For example, in FIG. 1, the rotor shaft 34 is hollow, but may be solid.

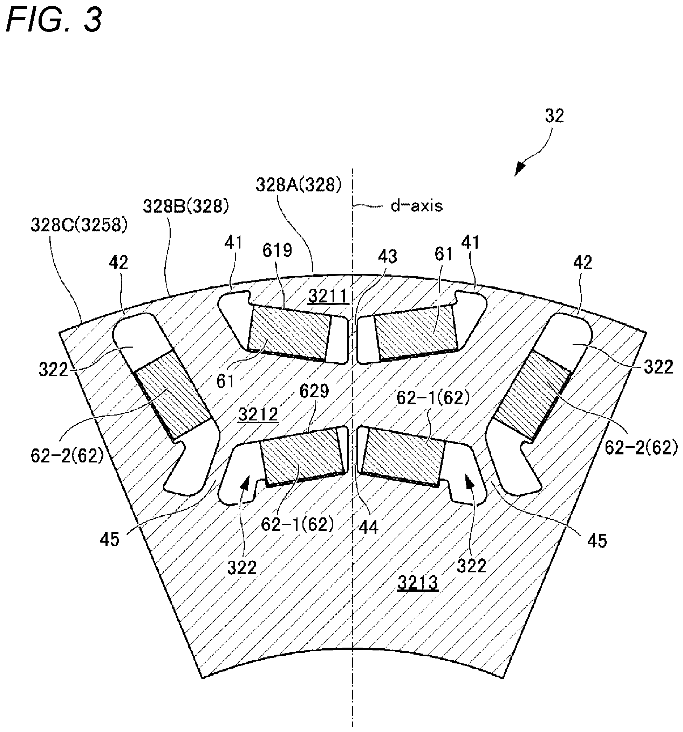

Next, the rotor core 32 and the magnet pieces 61, 62 will be described in more detail with reference to FIG. 3 and subsequent drawings. Hereinafter, a configuration related to one magnetic pole will be described, but the same may be applied to configurations related to other magnetic poles.

FIG. 3 is an enlarged view of the portion related to the one magnetic pole illustrated in FIG. 2. The configuration related to one magnetic pole is basically symmetric with respect to a d-axis (in FIG. 3, expressed in English as "d-axis") corresponding to the main magnetic flux direction (the direction of the field pole). Note that the direction of the d-axis corresponds to the direction of the magnetic field generated by the magnet pieces 61, 62 disposed in the rotor 30. Hereinafter, a circumferentially outer side refers to a side away from the d-axis, and a circumferentially inner side refers to a side approaching the d-axis.

Magnet holes 321 (hereinafter, referred to as "first-layer magnet holes 321") and magnet holes 322 (hereinafter, referred to as "second-layer magnet holes 322") are formed in the rotor core 32.

The two first-layer magnet holes 321 are paired to form a substantially V shape (a substantially V shape in which the radially outer side or the radially inner side is opened). However, in a modification, the two first-layer magnet holes 321 may be paired to form a straight line, or may be realized by one hole in a straight line (a straight line vertical to the d-axis). The magnet piece 61 is provided in each of the first-layer magnet holes 321. Note that a gap may be provided between the first-layer magnet hole 321 and the magnet piece 61 at both ends in the longitudinal direction of the magnet piece 61. Note that the gap may be a cavity or may be filled with resin or the like.

The second-layer magnet holes 322 are provided radially inside the first-layer magnet holes 321. Note that regarding the positional relationship between the first-layer magnet holes 321 and the second-layer magnet holes 322, the radially outer side or the radially inner side is a positional relationship in which points that intersect a common line segment passing through the rotation axis 12 as viewed in the axial direction are compared. The same applies to a positional relationship between a first section 3211 described later and the first-layer magnet holes 321.

Similarly to the first-layer magnet holes 321, the second-layer magnet holes 322 are formed in a pair symmetrical with respect to the d-axis. Note that the second-layer magnet holes 322 on both sides of the d-axis in the circumferential direction have a wider extending range in the circumferential direction than the first-layer magnet holes 321 on both sides of the d-axis in the circumferential direction. The magnet piece 62 is provided in each of the second-layer magnet holes 322. Note that a gap may be provided between the second-layer magnet hole 322 and the magnet piece 62 at both ends in the longitudinal direction of the magnet piece 62. Note that the gap may be a cavity or may be filled with resin or the like.

In the present embodiment, the two second-layer magnet holes 322 are formed on one side of the d-axis in the circumferential direction, and the two second-layer magnet holes 322 are formed on the other side of the d-axis in the circumferential direction. That is, a total of four second-layer magnet holes 322 are formed for one magnetic pole.

Since the rotor core 32 has the first-layer magnet holes 321 and the second-layer magnet holes 322 as described above, the rotor core 32 has three sections 3211, 3212, 3213 (hereinafter, also referred to as the first section 3211, a second section 3212, and a third section 3213) connected only via bridge portions in the radial direction.

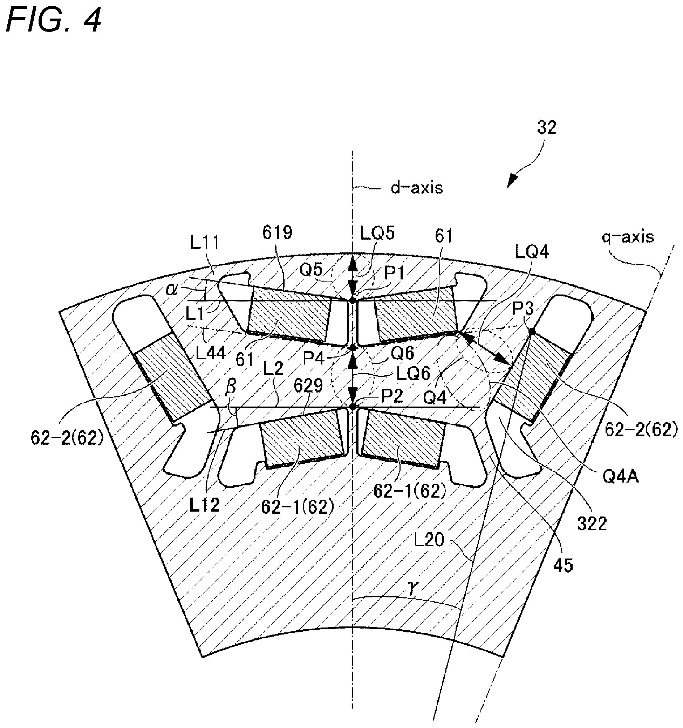

Specifically, the first section 3211 extends radially outward from the first-layer magnet holes 321. The first section 3211 forms a part 328A (see FIG. 3) of an outer circumferential surface 328 of the rotor core 32. The first section 3211 forms a magnetic path of a q-axis (expressed in English as "q-axis" in FIG. 4) magnetic flux. Specifically, the q-axis magnetic flux related to the first section 3211 flows from one end in the circumferential direction to the other end in the circumferential direction of the first section 3211 through the first section 3211 (a region on a radially outer side of the first-layer magnet holes 3212).

The second section 3212 passes between the second-layer magnet holes 322 and the first-layer magnet holes 321, and the both circumferential sides thereof extend to the outer circumferential surface 328 of the rotor core 32. The second section 3212 forms a part 328B (hereinafter, also referred to as an "outer circumferential surface portion 328B of the second section 3212") of the outer circumferential surface 328 of the rotor core 32 on both circumferential sides of the first section 3211 (see FIG. 3). The second section 3212 forms a magnetic path of a q-axis magnetic flux. Specifically, the q-axis magnetic flux related to the second section 3212 flows between the second-layer magnet holes 322 and the first-layer magnet holes 321 from one end (outer circumferential surface portion 328B on one side) toward the other end (outer circumferential surface portion 328B on the other side) of the second section 3212.

The third section 3213 passes through the radially inner side of the second-layer magnet holes 322, and the both circumferential sides thereof extend to the outer circumferential surface 328 of the rotor core 32. The third section 3213 forms a part 328C (see FIG. 3) of the outer circumferential surface 328 of the rotor core 32 on both circumferential sides of the second section 3212.

Note that in the present embodiment, the mass of the third section 3213 may be significantly larger than the mass of the second section 3212, and the mass of the second section 3212 may be significantly larger than the mass of the first section 3211.

In addition, since the rotor core 32 includes the three sections 3211, 3212, 3213 as described above, the rotor core 32 includes a plurality of bridge portions 41, 42, 43, 44, 45 connecting the three sections 3211, 3212, 3213.

On the radially outer side, the bridge portion 41 (hereinafter, referred to as a "first bridge portion 41") supports the first section 3211 in relation to the second section 3212. That is, the first bridge portion 41 connects the second section 3212 and the first section 3211 and extends in the circumferential direction. The first bridge portions 41 are provided in pairs on both circumferential sides (circumferentially outer sides) of the first section 3211.

On the radially outer side, the bridge portion 42 (hereinafter, referred to as a "second bridge portion 42") supports the second section 3212 in relation to the third section 3213. That is, the second bridge portion 42 connects the third section 3213 and the second section 3212 and extends in the circumferential direction. The second bridge portions 42 are provided in pairs on both circumferential sides (circumferentially outer sides) of the second section 3212.

On the d-axis, the bridge portion 43 (hereinafter, referred to as a "first center bridge portion 43") supports the first section 3211 in relation to the second section 3212.

On the d-axis, the bridge portion 44 (hereinafter, referred to as a "second center bridge portion 44") supports the second section 3212 in relation to the third section 3213.

Between the two second-layer magnet holes 322, the bridge portion 45 (hereinafter, referred to as a "second intermediate bridge portion 45") supports the second section 3212 in relation to the third section 3213.

In the example illustrated in FIG. 3, the magnet piece 61 inserted into each of the first-layer magnet holes 321 forms a permanent magnet (an example of a first-layer permanent magnet) of a first layer from the radially outer side, and the magnet piece 62 inserted into each of the second-layer magnet holes 322 forms a permanent magnet (an example of a second-layer permanent magnet) of the second layer from the radially outer side. Note that in the present embodiment, one magnet piece (the magnet piece 61 or the magnet piece 62) is inserted into one magnet hole (the first-layer magnet hole 321 or the second-layer magnet hole 322), but in a modification, two or more magnet pieces may be inserted into one magnet hole.

In addition, in the example illustrated in FIG. 3, neither the first-layer magnet hole 321 nor the second-layer magnet hole 322 extends on the d-axis, but the first center bridge portion 43 and the second center bridge portion 44 are provided on the d-axis. However, in a modification, one or both of the first-layer magnet hole 321 and the second-layer magnet hole 322 may extend on the d-axis.

Furthermore, in the example illustrated in FIG. 3, neither the magnet piece 61 nor the magnet piece 62 extends on the d-axis similarly to the first-layer magnet hole 321 and the second-layer magnet hole 322, but only one of the magnet piece 61 and the magnet piece 62 may extend on the d-axis.

Next, a characteristic configuration of the present embodiment will be described with reference to FIG. 4 and subsequent drawings. FIG. 4 is a further enlarged view of a part of FIG. 3, and is a view illustrating lines for explaining shape features. Hereinafter, for the sake of distinction, the magnet piece 62 inserted into the second-layer magnet hole 322 on the circumferentially inner side out of the second-layer magnet holes 322 on the circumferentially outer side and the circumferentially inner side may be also referred to as the magnet piece 62 on the circumferentially inner side (denoted as a magnet piece 62-1 in FIG. 3 and the like), and the magnet piece 62 inserted into the second-layer magnet hole 322 on the circumferentially outer side may be also referred to as the magnet piece 62 on the circumferentially outer side (denoted as a magnet piece 62-2 in FIG. 3 and the like).

In the present embodiment, as illustrated in FIG. 4, an angle γ on the acute angle side formed by the d-axis and a line segment L20 connecting a corner portion (see P3 in FIG. 4) and the center of the rotor core 32 (see the rotation axis 12 in FIG. 2) is preferably in a range of 12° or more and 20° or less. The corner portion related to the angle γ is a corner portion of the magnet piece 62-2 on the circumferentially outer side out of the two magnet pieces 62, and is a corner portion on the d-axis side and on the radially outer side out of the four corner portions of the magnet piece 62-2.

In the present embodiment, as illustrated in FIG. 4, the magnet angle (hereinafter, also referred to as a "first magnet angle α") related to the magnet piece 61 on the circumferentially inner side is defined as an angle formed by a reference line L1 and an extending direction L11 of the magnet piece 61 as viewed in the axial direction. The extending direction L11 of the magnet piece 61 corresponds to the extending direction of a radially outward side surface (side surface in the main magnetic flux direction) 619 of the magnet piece 61 as viewed in the axial direction. In addition, the reference line L1 corresponds to a line segment extending in a direction vertical to the d-axis from an intersection P1 between the d-axis and the extending direction of the magnet piece 61 as viewed in the axial direction. The radially inner side of the reference line L1 as viewed in the axial direction is defined as the positive side of the first magnet angle α.

In addition, in the present embodiment, the magnet angle (hereinafter, also referred to as a "second magnet angle β") related to the magnet piece 62-1 on the circumferentially inner side is defined as an angle formed by a reference line L2 and an extending direction L12 of the magnet piece 62-1 on the circumferential inner side as viewed in the axial direction. The extending direction L12 of the magnet piece 62 corresponds to the extending direction of a radially outward side surface (side surface in the main magnetic flux direction) 629 of the magnet piece 62 as viewed in the axial direction. In addition, the reference line L2 corresponds to a line segment extending in a direction vertical to the d-axis from an intersection P2 between the d-axis and the extending direction of the magnet piece 62 as viewed in the axial direction. The radially inner side of the reference line L2 as viewed in the axial direction is defined as the positive side of the second magnet angle β.

In the present embodiment, the first magnet angle α and the second magnet angle β have a relationship of the first magnet angle α < the second magnet angle β.

Incidentally, as a comparative example, in a case where the first magnet angle α = the second magnet angle β and the second magnet angle β > 0, as described above in "SOLUTIONS TO PROBLEMS", there is a problem that the q-axis magnetic path in the first section 3211 becomes narrow in the region near the d-axis (see Q5 portion in FIG. 4), and reluctance torque cannot be effectively used. Such a disadvantage tends to be noticeable when the second magnet angle β is relatively large.

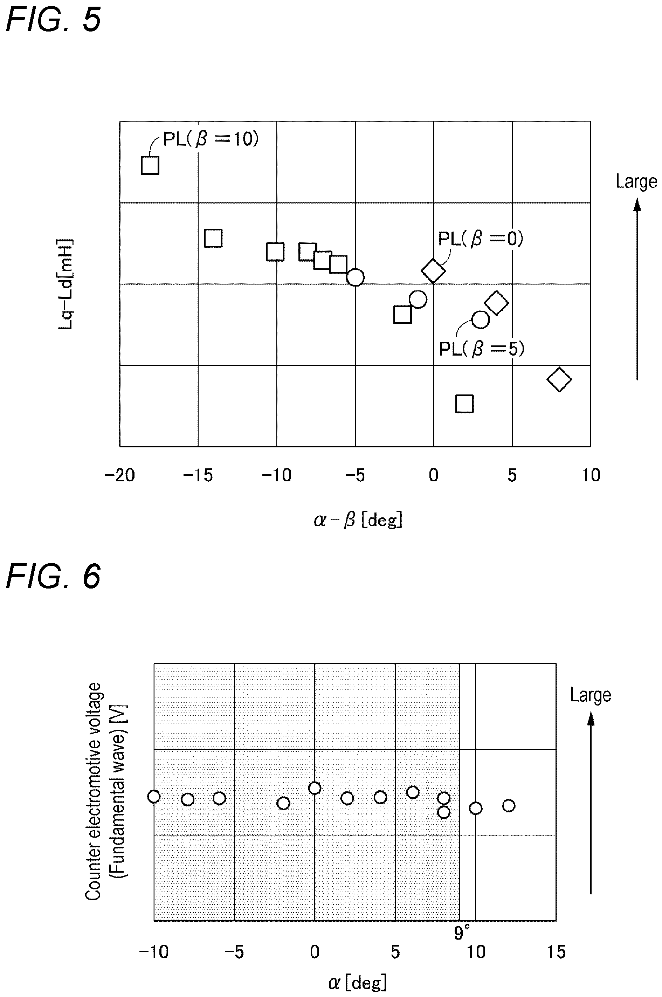

In contrast, according to the present embodiment, the reluctance torque can be effectively used by satisfying the relationship of the first magnet angle α < the second magnet angle β. In addition, as described below with reference to FIG. 5 and subsequent drawings, reluctance torque can be increased without significantly increasing the counter electromotive voltage or while reducing the counter electromotive voltage.

Further, in the present embodiment, since the relationship of the first magnet angle α< the second magnet angle β is satisfied, for example, the q-axis magnetic path width tends to be narrowed in the region near the d-axis of the second section 3212 (see Q6 portion in FIG. 4), but the adverse effect caused by this can be substantially eliminated. In other words, if LQ6 is decreased within a range in which magnetic saturation occurs in a Q4 portion (that is, a range in which magnetic saturation does not occur in the Q6 portion), LQ5 can be easily increased by an amount by which LQ6 is decreased. Therefore, the reluctance torque at the first section 3211 can be increased without reducing the reluctance torque at the second section 3212. Here, LQ4 (an example of the second distance) is the shortest distance between the magnet piece 61 and the magnet piece 62-2 on the circumferentially outer side as viewed in the axial direction, and is the shortest distance between the magnet piece 62-2 and the corner portion on the radially inner side and the q-axis side of the magnet piece 61 in the illustrated example. In addition, LQ6 (an example of the first distance) is a distance between an intersection P4 on the d-axis of a straight line L44 along the radially inner edge of the magnet piece 61 and the above-described intersection P2 as viewed in the axial direction. At this time, LQ6 < LQ4 is preferable. Note that LQ5 is the shortest distance between the intersection P1 and the outer circumferential surface of the rotor core 32 as viewed in the axial direction. Note that in the illustrated example, LQ5 < LQ6.

In addition, in another embodiment, instead of the Q4 portion illustrated in FIG. 4, a configuration in which magnetic saturation occurs in a Q4A portion on the radially inner side of (the side closer to the d-axis than) the Q4 portion illustrated in FIG. 4 may be used. In this case, for example, a portion where the distance between the magnet hole 321 and the magnet hole 322 in which the magnet piece 62-2 is disposed, that is, the distance on the radially inner side of the corner portion (see P3 in FIG. 4) of the magnet piece 62-2 is minimum may correspond to a portion where magnetic saturation occurs in the second section 3212. Therefore, in this case, LQ4 described above may be the minimum distance between the magnet hole 321 and the magnet hole 322 in which the magnet piece 62-2 is disposed, that is, the minimum distance on the radially inner side of the corner portion (see P3 in FIG. 4) of the magnet piece 62-2. Note that in such a configuration, the magnet hole 322 in which magnet piece 62-2 is disposed may have a radially outward overhang portion (not illustrated) at an end portion on the side closer to the d-axis (that is, an end portion on the second intermediate bridge portion 45 side), and the overhang portion may form the minimum distance related to LQ4. Also in this case, LQ6 < LQ4 is preferable.

FIGS. 5 to 9 are explanatory diagrams of effects of the present embodiment based on the analysis results.

FIG. 5 illustrates the distribution of each plot when the horizontal axis represents the difference (= α - β) between the first magnet angle α and the second magnet angle β, and the vertical axis represents the difference (= Lq - Ld) between q-axis inductance Lq and d-axis inductance Ld. Note that, along the vertical axis, the numerical value increases as it goes upward. In FIG. 5, the plot point of the shape associated with β = 10 is a plot point when the second magnet angle β = 10°, the plot point of the shape associated with β = 5 is a plot point when the second magnet angle β = 5°, and the plot point of the shape associated with β = 0 is a plot point when the second magnet angle β = 0°.

As the difference (= Lq - Ld) between the q-axis inductance Lq and the d-axis inductance Ld increases, the reluctance torque increases. Therefore, it can be seen from FIG. 5 that the reluctance torque is improved as α - β decreases.

In this regard, in the present embodiment, since the relationship of the first magnet angle α < the second magnet angle β is satisfied as described above, α - β is smaller than 0. Therefore, according to the present embodiment, it can be seen that the reluctance torque is increased as compared with the case where the relationship of the first magnet angle α < the second magnet angle β is not satisfied under the same second magnet angle β.

In addition, in the relationship of the first magnet angle α < the second magnet angle β, the difference (= α - β) is preferably -1° or less, more preferably -2° or less, and still more preferably -5° or less. In this case, as can be seen from FIG. 5, the reluctance torque can be effectively increased.

Here, when the second magnet angle β is 0° or less, the width of the second section 3212 on the d-axis tends to increase, and the mass of the second section 3212 tends to increase. When the mass of the second section 3212 increases, the increase in the rotation speed of the motor 1 tends to be inhibited due to the centrifugal force. Therefore, in the present embodiment, the second magnet angle β is preferably larger than 0°. As a result, the reluctance torque can be increased while increasing the rotation speed of the motor 1.

Note that in a case where the second magnet angle β is larger than 0°, the second-layer magnet holes 322 (and the magnet pieces 62 in the second-layer magnet holes 322 accordingly) form a W shape centered on the d-axis. Specifically, in the second-layer magnet holes 322, portions on a side close to the d-axis (portions into which the magnet pieces 62-1 on the circumferentially inner side are inserted) have a protruding shape protruding radially outward about the d-axis, and a portion on a side far from the d-axis (a portion into which the magnet piece 62-2 on the circumferentially outer side is inserted) forms a protruding shape protruding radially inward in combination with the portion on the side close to the d-axis.

FIG. 6 illustrates the distribution of each plot when the horizontal axis represents the first magnet angle α and the vertical axis represents the counter electromotive voltage. Note that, along the vertical axis, the numerical value increases as it goes upward. Each plot point illustrated in FIG. 6 indicates an analysis result when the first magnet angle α is changed under the second magnet angle β = 10°. It can be seen from FIG. 6 that the counter electromotive voltage does not significantly increase even in a case where the first magnet angle α is 9° or less.

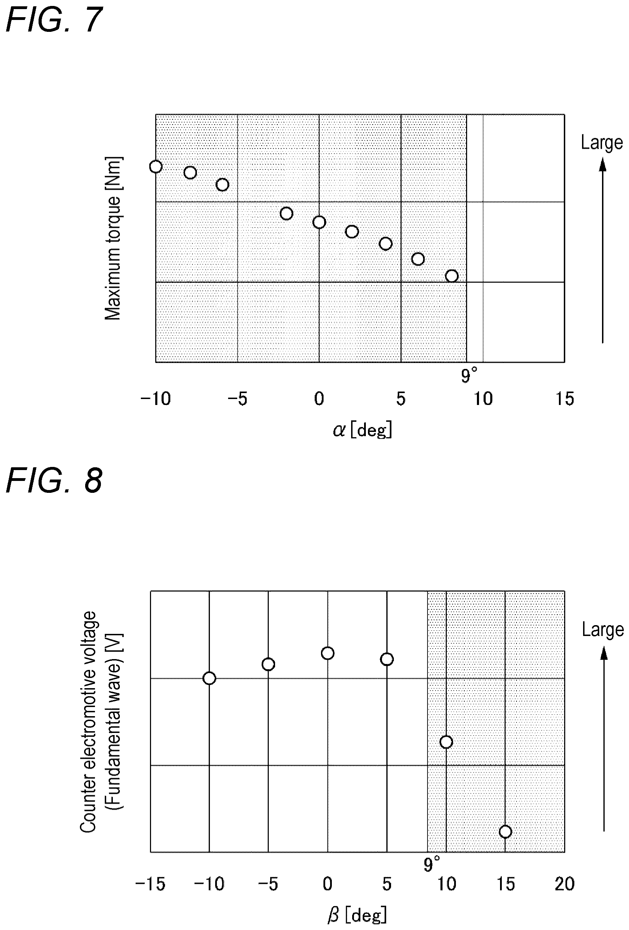

FIG. 7 illustrates the distribution of each plot when the horizontal axis represents the first magnet angle α and the vertical axis represents the maximum torque of the motor 1. Note that, along the vertical axis, the numerical value increases as it goes upward. Each plot point illustrated in FIG. 7 indicates an analysis result when the first magnet angle α is changed under the second magnet angle β = 10°. It can be seen from FIG. 7 that the maximum torque remarkably increases as the first magnet angle α becomes smaller than 9°.

FIG. 8 illustrates the distribution of each plot when the horizontal axis represents the second magnet angle β and the vertical axis represents the counter electromotive voltage. Note that, along the vertical axis, the numerical value increases as it goes upward. Each plot point illustrated in FIG. 8 indicates an analysis result when the second magnet angle β is changed under the first magnet angle α = 8°. It can be seen from FIG. 8 that the counter electromotive voltage decreases as the second magnet angle β goes away from 0°. In addition, it can also be seen that the counter electromotive voltage remarkably decreases in the region where the second magnet angle β exceeds 9°.

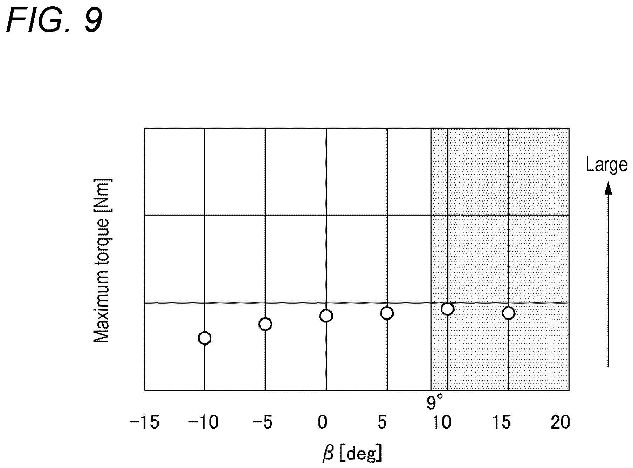

FIG. 9 illustrates the distribution of each plot when the horizontal axis represents the second magnet angle β and the vertical axis represents the maximum torque of the motor 1. Note that, along the vertical axis, the numerical value increases as it goes upward. Each plot point illustrated in FIG. 9 indicates an analysis result when the second magnet angle β is changed under the first magnet angle α = 8°. It can be seen from FIG. 9 that the maximum torque tends to saturate near the peak value around the second magnet angle β = 10°.

Here, in FIG. 6, the counter electromotive voltage does not significantly increase in the range of the first magnet angle α < 9° (emphasized by hatching) as compared with the outside of the range. In addition, in FIG. 8, the counter electromotive voltage is significantly reduced in the range of the second magnet angle β > 9° (emphasized by hatching), as compared with the outside of the range. Therefore, when the first magnet angle α < 9° and 9° < the second magnet angle β are satisfied, the counter electromotive voltage can be reduced.

In addition, in FIG. 7, the maximum torque increases in the range of the first magnet angle α < 9° (emphasized by hatching), as compared with the outside of the range. In addition, in FIG. 9, the maximum torque saturates near the peak value within the range of the second magnet angle β > 9° (emphasized by hatching). Therefore, when the first magnet angle α < 9° and the second magnet angle β > 9° are satisfied, the counter electromotive voltage can be increased.

Although each embodiment has been described in detail above, the present invention is not limited to a specific embodiment, and various modifications and changes can be made within the scope described in the claims. In addition, all or a plurality of the components of the above-described embodiments can be combined.

For example, in the above-described embodiment, the magnet pieces 61, 62 each have a substantially rectangular outer shape with linear edges as viewed in the axial direction, but the magnet pieces 61 or 62 may have a curved shape. In this case, the first magnet angle α or the second magnet angle β may be calculated by linearly approximating the curved shape. In addition, in this case, the magnet pieces 61, 62 each having a curved shape as viewed in the axial direction may be in the form of bonded magnets.

### REFERENCE SIGNS LIST

30: Rotor (Rotor for rotating electric machine), 32: Rotor core, 3211: First section, 3212: Second section, 3213: Third section, 321: First-layer magnet hole, 322: Second-layer magnet hole, 61: Magnet piece (First-layer permanent magnet, First magnet piece), 62: Magnet piece (Second-layer permanent magnet), 62-1: Magnet piece (Second magnet piece), and 62-2: Magnet piece (Third magnet piece)

## Claims

1. A rotor for a rotating electric machine, the rotor comprising:
a rotor core in which first-layer magnet holes are formed symmetrically with respect to a d-axis as viewed in an axial direction, and second-layer magnet holes are formed radially inside the first-layer magnet holes and are formed symmetrically with respect to the d-axis as viewed in the axial direction;
a first-layer permanent magnet that is disposed in each of the first-layer magnet holes; and
a second-layer permanent magnet that is disposed in each of the second-layer magnet holes,
wherein the rotor core includes a first section that is located radially outside the first-layer magnet holes and forms an outer circumferential surface of the rotor core, a second section that passes between the first-layer magnet holes and the second-layer magnet holes and has both circumferential sides extending to the outer circumferential surface of the rotor core, and a third section that passes radially inside the second-layer magnet holes and has both circumferential sides extending to the outer circumferential surface of the rotor core, and
when a magnet angle related to one magnet piece is defined as an angle formed by a reference line extending in a direction vertical to the d-axis from an intersection between the d-axis and an extending direction of a side surface of the one magnet piece in a main magnetic flux direction as viewed in the axial direction and the extending direction of the side surface, and a radially inner side of the reference line as viewed in the axial direction is defined as a positive side of a magnet angle,
a first magnet angle related to a first magnet piece that forms the first-layer permanent magnet and is on the d-axis or closest to the d-axis is smaller than a second magnet angle related to a second magnet piece that forms the second-layer permanent magnet and is on the d-axis or closest to the d-axis.

2. The rotor for a rotating electric machine according to claim 1, wherein the second magnet angle is positive, and the first magnet angle is negative.

3. The rotor for a rotating electric machine according to claim 1, wherein the second magnet angle is larger than the first magnet angle by 1 degree or more.

4. The rotor for a rotating electric machine according to claim 1, wherein the first magnet angle is smaller than 9 degrees, and the second magnet angle is larger than 9 degrees.

5. The rotor for a rotating electric machine according to any one of claims 1 to 4, wherein an acute angle formed by the d-axis and a line segment connecting a center of the rotor core and a corner portion on the d-axis side and on a radially outer side of a third magnet piece, the third magnet piece forming the second-layer permanent magnet and closest to a q-axis, is in a range of 12 degrees or more and 20 degrees or less.

6. The rotor for a rotating electric machine according to claim 5,
wherein when, among distances related to the second section,
a distance between an intersection on the d-axis of a straight line along a radially inner edge of the first magnet piece and an intersection on the d-axis of a straight line along a radially outer edge of the second magnet piece as viewed in the axial direction is defined as a first distance, and
a shortest distance between the first magnet piece and the third magnet piece, or a shortest distance between one of the first-layer magnet holes in which the first magnet piece is disposed and one of the second-layer magnet holes in which the third magnet piece is disposed, the shortest distance being a shortest distance on a radially inner side of the corner portion as viewed in the axial direction is defined as a second distance,
the second distance is larger than the first distance.
